# EUROPÄISCHE PATENTSCHRIFT

(11) **EP 2 559 830 B1**
(45) Veröffentlichungstag und Bekanntmachung des Hinweises auf die Patenterteilung: **31.12.2014**
(21) Anmeldenummer: 12003934.2
(22) Anmeldetag: 18.05.2012
(51) Int. Cl.: E04H 9/14, E02D 29/00, B63B 35/44

(54) **Schwimmkörper zum Tragen eines Gehäuses bei Hochwasser**
Buoyant body for carrying a housing in a flood
Corps flottant destiné à porter un boîtier en cas d'inondation

(30) Priorität: 20.05.2011 DE 102011102120
(43) Veröffentlichungstag der Anmeldung: 20.02.2013
(73) Patentinhaber: Masur, Klaus-Dieter, 67434 Neustadt a. d. Weinstrasse (DE)
(72) Erfinder: Masur, Klaus-Dieter, 67434 Neustadt a. d. Weinstrasse (DE)
(74) Vertreter: Fritsch, Klaus

(56) Entgegenhaltungen:
- DE-U1-202005 003 605
- US-A1- 2004 261 338

## Beschreibung

Die Erfindung betrifft einen auf einer Wasseroberfläche bei Hochwasser oder Überflutung aufschwimmenden Schwimmkörper zum Tragen eines Gehäuses, nach dem Oberbegriff des Anspruches 1.

Gehäuse in diesem Sinne sind feststehende Gebäude, Wohnmobile, Wohnwagen, Zelte, die im Bereich von Ufern an Flüssen oder Seen aufgebaut sind und bei einer Überflutung oder bei Hochwasser beschädigt werden können.

In Überflutungsgebieten an Uferbereichen von Flüssen, Seen usw. besteht oft die Gefahr, dass dort aufgestellte Gebäude, Wohnwagen oder Wohnmobile etc. aufgrund plötzlich auftretenden Hochwassers durch das Wasser beschädigt werden, wenn diese nicht rechtzeitig aus dem Überflutungsbereich entfernt werden. Feststehende Häuser können allerdings nicht aus dem Überflutungsbereich entfernt werden, was bei Wohnmobilen, Wohnwagen, also bei beweglichen Gehäusen durchaus möglich wäre.

Feststehende Gebäude, die nicht oder nicht ohne weiteres abtransportiert werden können, können auf Pontons aufgebaut werden, wie dies z.B. aus der US 7 793 466 B2 bekannt geworden ist. Hierbei sind mehrere Pontons nebeneinander angeordnet; die Führung des Gebäudes wird mittels zweier in den Erdboden eingegrabener Säulen bewirkt, die in Rohren innerhalb des Gebäudes geführt sind. Bei Hochwasser schwimmen die Pontons und damit das gesamte Gebäude auf der Wasseroberfläche auf. Die Säulen sollen das Gebäude horizontal und an Ort und Stelle halten. Die Rohre benötigen relativ viel Platz im Inneren des Gebäudes.

Aus der DE 200 2005 003 605 U1 ist bekannt, Container auf einer sog. Schute in Modulbauweise aufzustellen, welche Schute mittels Haltelagern an in den Erdboden eingegrabenen Dalben vertikal geführt ist. Bei Hochwasser schwimmt die Schute auf und wird an den Dalben an Ort und Stelle gehalten. Die Dalben befinden sich außerhalb der Schute und beeinträchtigen die Platzverhältnisse in den Containern nicht.

In der GB 2 424 655 A ist ein Ponton, auf dem z.B. eine Garage aufgebaut sein kann, beschrieben, der mittels vier in den Erdboden eingesetzter Stangen vertikal geführt ist. Die Stangen durchgreifen im Ponton abgedichtet angeordnete Rohre, wodurch eine Führung des Pontons bei Aufschwimmen auf der Wasseroberfläche erzielt wird.

Bei all diesen Ausführungen ist insbesondere bei Wellengang eine Schrägstellung oder ein Verkanten der Pontons bzw. der Schute nicht zu vermeiden. Dadurch können sich die Pontons oder die Schute an den Stangen, Dalben oder Säulen verklemmen, sodass eine freie vertikale Bewegung zumindest behindert ist und wodurch eine Überflutung der Oberseite des Pontons oder der Schute durch Wellen durchaus möglich ist oder nicht verhindert werden kann, so dass das darauf ausgestellte Gebäude doch durch das Hochwasser zumindest beschädigt werden kann.

Aufgabe der Erfindung ist es, einen Schwimmkörper der eingangs genannten Art zu schaffen, bei dem auch bei Wellengang eine Schrägstellung des Schwimmkörpers und eine Verkantung mit einer Festklemmung des Schwimmkörpers verhindert ist.

Diese Aufgabe wird erfindungsgemäß durch die Merkmale des Anspruches 1 gelöst.

Erfindungsgemäß also ist ein auf einer Wasseroberfläche bei Überflutung oder Hochwasser aufschwimmender Schwimmkörper zum Tragen eines Gehäuses dadurch gekennzeichnet, dass der Schwimmkörper mehrere im Erdboden versenkbare oder versenkte Zahnstangen umfasst, die abgedichtet und parallel zueinander durch denSchwimmkörper geführt sind, dass innerhalb des Schwimmkörpers Wellen oder Achsen vorgesehen sind, die miteinander drehfest gekuppelt sind, so dass alle Wellen im gleichen Drehsinn drehbar sind, dass die Wellen eine der Anzahl der Zahnstangen entsprechende Anzahl von Zahnrädern tragen, die mit den Zahnstangen kämmen, sodass der Schwimmkörper bei Aufschwimmen auf einer sich ändernden Wasseroberfläche immer in horizontaler Lage verbleibt.

Wenn Hochwasser auftritt, schwimmt der Schwimmkörper auf die Wasseroberfläche auf und aufgrund der im Erdboden eingegrabenen Zahnstangen treiben die Zahnräder die Achsen an und aufgrund der Kopplung aller Achsen werden alle Achsen und Zahnräder im gleichen Drehsinn angetrieben. Sollte aufgrund von Wellengang der Schwimmkörper auf einer Seite angehoben werden, werden alle Seiten gleichzeitig mit angehoben, so dass eine Verkantung und damit eine Verklemmung verhindert ist.

Eine vorteilhafte Ausgestaltung der Erfindung kann darin bestehen, dass die Wellen mittels Kegelzahnrädern miteinander gekuppelt sind.

Durch die Koppelung der Wellen wird erreicht, dass sich alle Wellen im gleichen Drehsinn drehen, so dass die horizontale Lage des Schwimmkörpers immer sichergestellt ist. Damit wird das auf dem Schwimmkörper aufgebaute Gehäuse durch Wellengang und überschwappendes Wasser nicht beschädigt.

Der Schwimmkörper kann zweckmäßig viereckig ausgebildet sein und wenigstens im Bereich seiner Ecken wenigstens je eine Zahnstange aufweisen, so dass der Raum innerhalb der Zahnstangen frei bleibt.

In vorteilhafter Weise können wenigstens vier Zahnstangen vorgesehen sein und je zwei Wellen verlaufen parallel zueinander, wogegen die anderen beiden Wellen senkrecht dazu verlaufen.

Der Schwimmkörper kann auch nur drei Wellen aufweisen, die ein gleichseitiges oder gleichschenkeliges Dreieck miteinander bilden, wobei wenigstens je eine Zahnstange Im Bereich der Ecken des Dreiecks angeordnet sein können.

Bei einer viereckigen Anordnung der Wellen, können wenigstens an zwei parallelen Wellen wenigstens je zwei Zahnstangen vorgesehen sein; es besteht auch die Möglichkeit, mehr als zwei Zahnstangen pro Welle vorzusehen.

Bei drei Wellen können zwei Zahnstangen jeder Welle zugeordnet sein, denen natürlich auch mit den Wellen fest verbundene Zahnräder zugeordnet sind.

Je nach Größe des Schwimmkörpers können auch je eine Zahnstange für wenigstens zwei parallele Wellen vorgesehen sein; auch bei drei Wellen könnte nur je eine Zahnstange vorgesehen sein.

Der Schwimmkörper kann dabei durch eine ein- oder doppelwandige Stahlwanne, Beton- oder Kunststoffwanne oder dergleichen gebildet sein.

Weitere vorteilhafte Ausgestaltungen und Verbesserungen der Erfindung sind den weiteren Unteransprüchen zu entnehmen.

An Hand der Zeichnung, in der ein Ausführungsbeispiel der Erfindung dargestellt ist, sollen die Erfindung, weitere vorteilhafte Ausgestaltungen und Verbesserungen und weitere Vorteile näher erläutert und beschrieben werden.

Es zeigen
- Fig. 1: eine Aufsicht auf einen erfindungsgemäßen Schwimmkörper,
- Fig. 2: eine Schnittansicht gemäß Schnittlinie II - II der Fig. 1,
- Fig. 3: eine Schnittansicht gemäß Schnittlinie III - III der Fig. 1 und
- Fig. 4: eine schematische Ansicht einer Wellenanordnung in Dreiecksform.

Ein rechteckiger Schwimmkörper 10 besitzt einen Boden 11 und Seitenwände 12, 13, 14 und 15, wobei die Seitenwände 12 und 13 die längeren Seitenwände sind. Im Bereich der Ecken des Schwimmkörpers 10 sind mittels Trennwänden 20, 20a, 20b und 21, 21a, 21b, 21c erste Aufnahmeräume 16, 17, 18 und 19 für miteinander kämmende Kegelzahnradpaare 22 und 23, 24 und 25, 26 und 27, 28 und 29 abgeteilt. Die Trennwände 20, 20a, 20b und 20c liegen jeweils in je einer Ebene, die parallel zu den Seitenwänden 14 und 15 liegt, wogegen die Trennwände 21, 21a, 21b und 21c ebenfalls in je einer Ebene liegen, die parallel zu den Seitenwänden 12,13 verläuft. Die ersten Aufnahmeräume 16, 17, 18 und 19 sind begrenzt durch die Seitenwände 12, 13, 14, 15 in den Ecken des Schwimmkörpers 10. Alle Trennwände 20,... verlaufen senkrecht zum Boden 11.

Die Mittelachsen der Kegelzahnräder 23, 24 in den Aufnahmeräumen 16, 17 fluchten miteinander, ebenso wie die Mittelachsen der Kegelzahnräder 22, 26 in den Aufnahmeräumen 16 und 18 der Kegelzahnräder 25, 29 in den Aufnahmeräumen 17 und 19 sowie diejenigen der Kegelzahnräder 27, 28 in den Aufnahmeräumen 18, 19. Die Kegelzahnräder 23, 24 sind miteinander mittels einer ersten Achse 30, die Kegelzahnräder 25 und 29 mittels einer zweiten Achse 31, die Kegelzahnräder 22 und 26 mittels einer dritten Achse 32 und die Kegelzahnräder 27 und 28 mittels einer vierten Achse 33 drehfest miteinander verbunden, wobei die erste und vierte Achse 30, 33 parallel zueinander und die zweite und dritte Achse 31, 32 ebenfalls parallel zueinander und senkrecht zu der ersten und vierten Achse 30, 33 verlaufen, und zwar jeweils parallel zu den benachbarten Seitenwänden 12, 13, 14, 15. Zwischen den sich gegenüberliegenden Trennwänden 20, 20a, 20b, 20c; 21, 21a, 21b, 21c der jeweiligen Aufnahmeräume 16, 17, 18 und 19 sind Rohre 34, 35, 36, 37 vorgesehen, die in die Aufnahmeräume 16 bis 19 einmünden und die Achsen 30 bis 33 umgeben.

Die Rohre 37 und 35 sind unterbrochen durch je zwei weitere Aufnahmeräume 38,39 und 40, 41, von denen die weiteren Aufnahmeräume 38, 40 und 39 und 41 sich jeweils gegenüberliegen und jeweils in geringem Abstand zu den Aufnahmeräumen 16, 17 bzw. 18 und 19 angeordnet sind. Wie weiter unten näher erläutert wird, entstehen dabei in jedem Rohr 35, 37 je drei Rohrabschnitte 37a, 37b, 37c und 35a, 35b, 35c, von denen sich die Rohrabschnitte 35a, 37a sich zwischen den zweiten Aufnahmeräumen 40, 41 bzw. 38, 39 und die Rohrabschnitte 37a, 37c bzw. 35a, 35c sich zwischen den Aufnahmeräumen 18, 19; 16, 17 und den weiteren Aufnahmeräumen 38, 39 bzw. 40, 41 befinden. Die Innendurchmesser der Rohre und Rohrabschnitte 35, 37, 34 36; 35a, 35b, 35c; 37a, 37b und 37c entsprechen den Außendurchmessern der Wellen 30, 31, 32, 33 bzw. sind geringfügig größer als diese und aneinander angepasst.

Mit den Achsen 37 und 31 sind je zwei Zahnräder 42, 43 bzw. 44 und 45 drehfest verbunden. Mit den Zahnrädern 42, 43, 44 und 45 kämmen vertikal verlaufende Zahnstangen 46, 47 und 48 und 49, die sich in den weiteren Aufnahmeräumen 40, 41,42 und 43 befinden und den Boden 11 des Schwimmkörpers 10 nach unten durchdringen und im Erdboden verankert sind. Die Zahnstangen 46 und 47 liegen an der Seitenwand 13 und die Zahnstangen 48 und 49 an der Seitenwand 12 an.

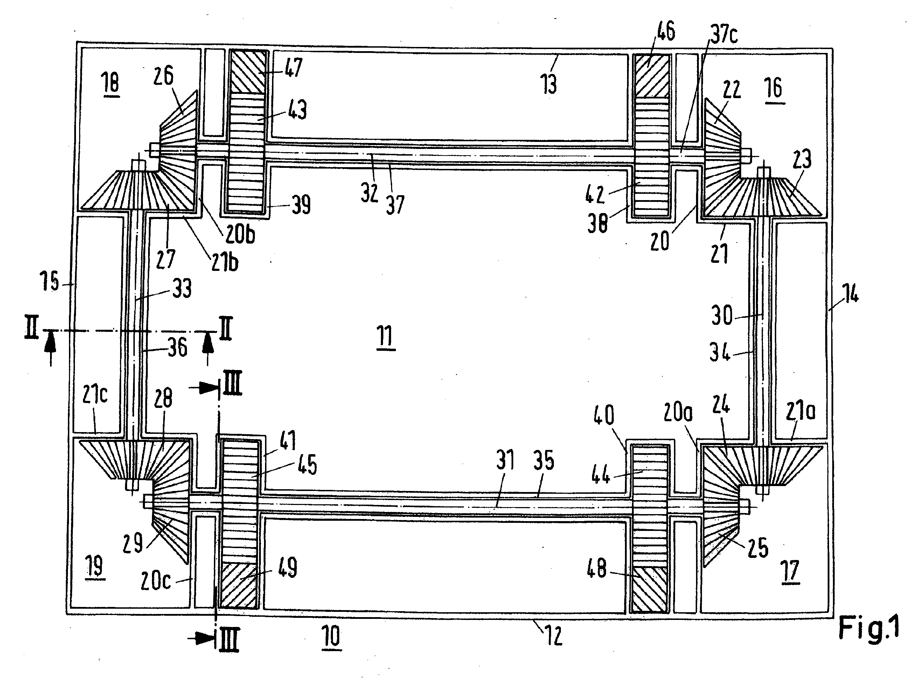

Wenn nun Hochwasser auftritt, schwimmt der Schwimmkörper 10 auf und bewegt sind vertikal nach oben, hier senkrecht zur Zeichenebene der Fig. 1. Da die Zahnstangen 46, 47, 48 und 49 mit den Zahnrädern 42 und 43 bzw. 44 und 45 kämmen, werden die Achsen 31, 32 in Drehung versetzt und über die Kegelzahnräder 24, 25, 28, 29 und 20, 21, 26, 27 auch die Achsen 30 und 33, so dass alle Achsen 30, 31, 32, 33 miteinander gekoppelt sind und dadurch der Schwimmkörper 10 immer in der Horizontalen bleibt, so dass Wellengang nicht zu einer Schrägstellung und Verkantung und damit zu einer Verklemmung des Schwimmkörpers 10 führt. Der Schwimmkörper 10 bleibt somit immer in der Horizontalen, so dass das Wasser nicht über den Schwimmkörper 10 schwappt und ein darauf aufstehendes Gehäuse beschädigt.

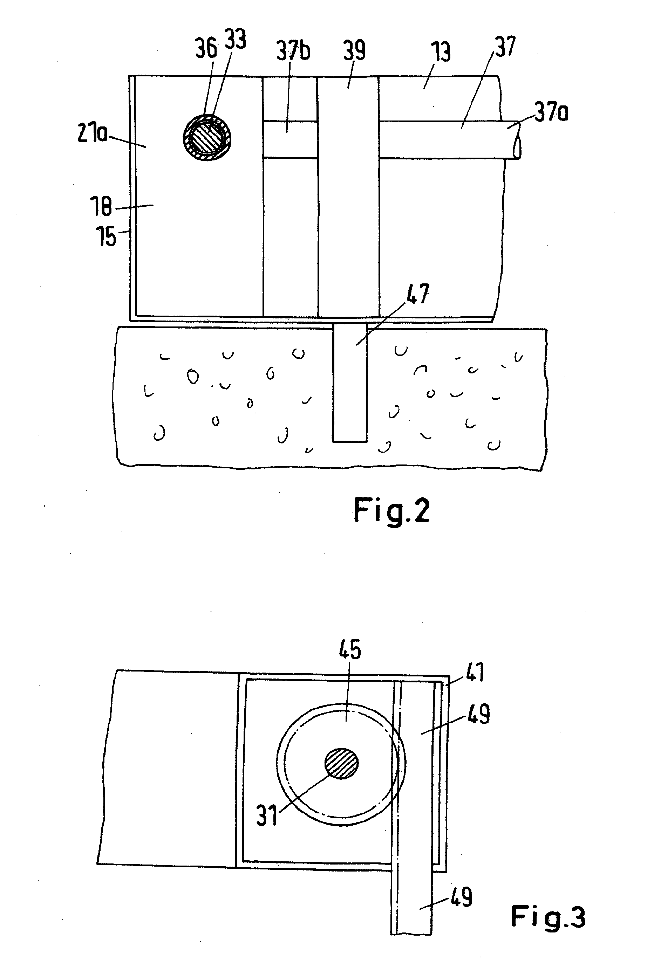

Die Fig. 2 zeigt eine Schnittansicht gemäß Schnittlinie II - II der Fig. 1. Dabei erkennt man die der Trennwand 21 entsprechende Trennwand 21a des Aufnahmeraumes 18 sowie das Rohr 36 und die Achse 33. An der der Trennwand 20 entsprechenden Trennwand 20a des Aufnahmeraumes 18 schließt das Rohr 37 an, welches durch den weiteren Aufnahmeraum 39 für das Zahnrad 43 und die Zahnstange 47 in die Rohrabschnitte 37a und 37b unterteilt ist; der Rohrabschnitt 37b befindet sich zwischen dem Aufnahmeraum 18 und dem weiteren Aufnahmeraum 39 und der Rohrabschnitt 37a zwischen dem weiteren Aufnahmeraum 39 und dem weiteren Aufnahmeraum 38 für das Zahnrad 42 und die Zahnstange 46; zwischen diesem weiteren Aufnahmeraum 38 und dem Aufnahmeraum 18 liegt ein Rohrabschnitt 37c.

Die Fig. 3 zeigt eine Schnittansicht gemäß Schnittlinie III - III der Fig. 1 des weiteren Aufnahmeraumes für das Zahnrad 45 und die Zahnstange 49. Man erkennt auch die Achse 31, die mit dem Zahnrad 45 drehfest verbunden ist.

Der Schwimmkörper 10 ist hier als rechteckiger Schwimmkörper dargestellt. Er kann auch quadratisch, oval oder rund ausgebildet sein. Da der Schwimmkörper 10 nach unten wasserdicht ist, kann die obere Kante mittels einer Deckwand abgedeckt sein, wobei diese eine Öffnung aufweisen kann, so dass das Innere des Schwimmkörpers 10 als eine Art Keller unter einem Wohnwagen benutzt werden kann.

In der Fig. 1 ist dargestellt, dass den beiden Wellen 32, 31 je zwei Zahnstangen 46, 47, 48, 49 zugeordnet sind. Es besteht auch die Möglichkeit, dass nur eine Zahnstange etwa in der Mitte der Wellen 32, 31 oder mehr als zwei Zahnstangen vorgesehen sein können. Natürlich können auch wenigstens eine Zahnstange den Wellen 30, 33 zugeordnet werden.

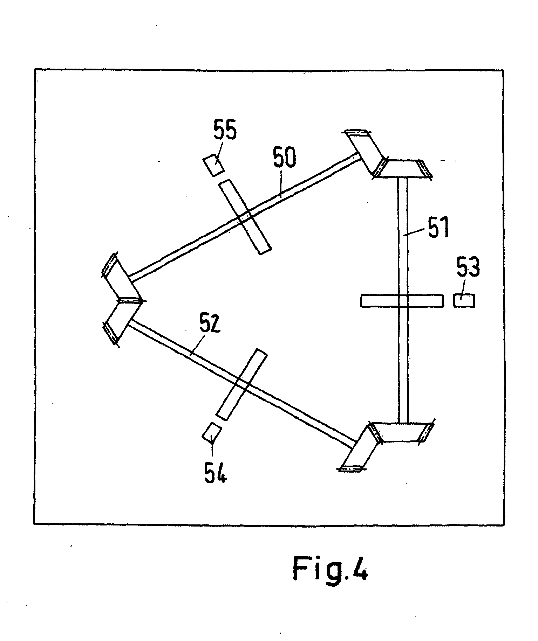

Wenn, wie in der Fig. 4 dargestellt, drei Wellen 50, 51, 52 vorgesehen sind, können jeder Welle 50, 51 und 52 je eine Zahnstange 53, 54, 55 oder wenigstens je zwei Zahnstangen zugeordnet werden. Die Dreiecksanordnung kann in Form eines gleichseitigen oder eines gleichschenkeligen Dreiecks ausgebildet sein.

Auf die Oberseite oder die obere Kante des Schwimmkörpers kann ein Deckel aufgesetzt sein, auf dem Wohnwägen oder Wohnmobile abgestellt werden können. Gegebenenfalls kann im Deckel eine Öffnung vorgesehen sein, so dass das Innere des Schwimmkörpers als eine Art Keller dienen kann.

Die Rohre, die die Wellen aufnehmen, dienen einer Kraftübertragung vom Schwimmkörper auf die Wellen und umgekehrt, so dass die Wellen über die Rohre den Schwimmkörper anheben.

## Patentansprüche

1. Auf einer Wasseroberfläche bei Überflutung aufschwimmender Schwimmkörper (10) zum Tragen eines Gehäuses, **dadurch gekennzeichnet, dass** der Schwimmkörper(10) mehrere im Erdboden versenkbare oder versenkte Zahnstangen (46,47,48,49) umfasst, die abgedichtet und parallel zueinander durch den Schwimmkörper (10) geführt sind, dass innerhalb des Schwimmkörpers (10) Wellen oder Achsen (31, 32, 33, 34; 50, 51, 52) vorgesehen sind, die miteinander drehfest gekuppelt sind, so dass alle Wellen (31, 32, 33, 34; 50, 51, 52) im gleichen Drehsinn drehbar sind, dass die Wellen (31, 32, 33, 34; 50, 51, 52) eine der Anzahl der Zahnstangen (46, 47, 48, 49) entsprechende Anzahl von Zahnrädern (40, 41, 42, 43) tragen, die mit den Zahnstangen (46, 47, 48, 49) kämmen, sodass der Schwimmkörper (10) bei Aufschwimmen auf einer sich ändernden Wasseroberfläche immer in horizontaler Lage verbleibt.

2. Schwimmkörper nach Anspruch 1, **dadurch gekennzeichnet, dass** die Wellen (31, 32, 33, 34; 50, 51, 52) mittels Kegetzahnrädern (22, 23, 24, 25, 26, 27, 28, 29) miteinander gekuppelt sind.

3. Schwimmkörper nach einem der Ansprüche 1 und 2, **dadurch gekennzeichnet, dass** pro Welle (31, 32, 33, 34; 50, 51, 52) mindestens je eine Zahnstange (46, 47, 48, 49) vorgesehen ist.

4. Schwimmkörper nach einem der vorigen Ansprüche, **dadurch gekennzeichnet, dass** der Schwimmkörper (10) viereckig ausgebildet ist und wenigstens im Bereich seiner Ecken je eine Zahnstange (46, 47, 48, 49) aufweist.

5. Schwimmkörper nach Anspruch 4, **dadurch gekennzeichnet, dass** zwei parallel zueinander verlaufenden Wellen (31, 32) je zwei Zahnstangen (46, 47, 48, 49)zugeordnet sind.

6. Schwimmkörper nach einem der Ansprüche 1 bis 3, **dadurch gekennzeichnet, dass** die Wellen (50, 51, 52) dreieckförmig einander zugeordnet sind und dass jeder Welle (50, 51, 52) wenigstens eine Zahnstange (53. 54, 55) zugeordnet ist.

7. Schwimmkörper nach einem der vorigen Ansprüche, **dadurch gekennzeichnet, dass** der Schwimmkörper durch eine ein- oder doppelwandige Stahlwanne, Beton- oder Kunststoffwanne oder dergleichen gebildet ist.

## Claims

1. Buoyant body (10) for carrying a housing unit, which buoyant body floats on a water surface during flooding, **characterized in that** the buoyant body (10) comprises a plurality of racks (46, 47, 48, 49) which can be sunk or are sunk in the ground and which are guided in a sealed manner and parallel to one another by the buoyant body (10), **in that** shafts or axles (31, 32, 33, 34; 50, 51, 52) are provided within the buoyant body (10) and are coupled to one another in a rotationally fixed manner such that all the shafts (31, 32, 33, 34; 50, 51, 52) can be rotated in the same direction of rotation, **in that** the shafts (31, 32, 33, 34; 50, 51, 52) bear a number of pinions (40, 41, 42, 43) which corresponds to the number of racks (46, 47, 48, 49), which pinions mesh with the racks (46, 47, 48, 49), with the result that, when floating on a changing water surface, the buoyant body (10) always remains in the horizontal position.

2. Buoyant body according to Claim 1, **characterized in that** the shafts (31, 32, 33, 34; 50, 51, 52) are coupled to one another by means of bevel gearwheels (22, 23, 24, 25, 26, 27, 28, 291).

3. Buoyant body according to either of Claims 1 and 2, **characterized in that** in each case at least one rack (46, 47, 48, 49) is provided for each shaft (31, 32, 33, 34; 50, 51, 52).

4. Buoyant body according to one of the preceding claims, **characterized in that** the buoyant body (10) has a quadrangular design and has in each case one rack (46, 47, 48, 49) at least in the region of its corners.

5. Buoyant body according to Claim 4, **characterized in that** two shafts (31, 32) extending parallel to one another are in each case assigned two racks (46, 47, 48, 49).

6. Buoyant body according to one of Claims 1 to 3, **characterized in that** the shafts (50, 51, 52) are assigned to one another in a triangular shape and **in that** each shaft (50, 51, 52) is assigned at least one rack (53, 54, 55).

7. Buoyant body according to one of the preceding claims, **characterized in that** the buoyant body is formed by a single-or double-walled steel trough, concrete trough or plastic trough or the like.

## Revendications

1. Corps flottant (10) qui remonte à la surface de l'eau en cas d'inondation, pour porter un boîtier, **caractérisé en ce que** le corps flottant (10) comprend plusieurs crémaillères (46, 47, 48, 49) enfoncées ou pouvant être enfoncées dans le sol, lesquelles sont guidées de manière étanche et parallèlement les unes aux autres par le corps flottant (10), **en ce qu'**à l'intérieur du corps flottant (10) sont prévus des arbres ou des axes (31, 32, 33, 34 ; 50, 51, 52) qui sont accouplés les uns aux autres de manière solidaire en rotation, de telle sorte que tous les arbres (31, 32, 33, 34 ; 50, 51, 52) puissent tourner dans le même sens de rotation, **en ce que** les arbres (31, 32, 33, 34 ; 50, 51, 52) portent un nombre de roues dentées (40, 41, 42, 43) correspondant au nombre des crémaillères (46, 47, 48, 49), lesquelles roues dentées s'engrènent avec les crémaillères (46, 47, 48, 49) de telle sorte que le corps flottant (10), lorsqu'il remonte à la surface, reste toujours dans une position horizontale sur une surface de l'eau mouvementée.

2. Corps flottant selon la revendication 1, **caractérisé en ce que** les arbres (31, 32, 33, 34 ; 50, 51, 52) sont accouplés les uns aux autres au moyen de pignons coniques (22, 23, 24, 25, 26, 27, 28, 29).

3. Corps flottant selon l'une quelconque des revendications 1 et 2, **caractérisé en ce qu'**au moins une crémaillère (46, 47, 48, 49) respective est prévue pour chaque arbre (31, 32, 33, 34 ; 50, 51, 52).

4. Corps flottant selon l'une quelconque des revendications précédentes, **caractérisé en ce que** le corps flottant (10) est réalisé sous forme quadrilatérale et présente au moins dans la région de ses coins une crémaillère respective (46, 47, 48, 49).

5. Corps flottant selon la revendication 4, **caractérisé en ce que** deux arbres (31, 32) s'étendant parallèlement l'un à l'autre sont associés à deux crémaillères respectives (46, 47, 48, 49).

6. Corps flottant selon l'une quelconque des revendications 1 à 3, **caractérisé en ce que** les arbres (50, 51, 52) sont associés les uns aux autres en triangle et **en ce que** chaque arbre (50, 51, 52) est associé à au moins une crémaillère (53, 54, 55).

7. Corps flottant selon l'une quelconque des revendications précédentes, **caractérisé en ce que** le corps flottant est formé par une cuve acier, en béton ou en plastique à paroi simple ou double, ou similaire.
